# EUROPEAN PATENT SPECIFICATION

(11) **EP 2 383 112 B1**
(45) Date of publication and mention of the grant of the patent: **26.06.2013**
(21) Application number: 11164370.6
(22) Date of filing: 29.04.2011
(51) Int. Cl.: B32B 15/10, B32B 21/04, B32B 7/12, B32B 3/30, B44C 5/04, B32B 15/20, B32B 21/14, B32B 3/14, B27D 1/00

(54) **Decorative sheets with metallic effect for covering panels, particularly for the furniture industry, and related production method**
Dekorative Platten mit Metalleffekten zur Abdeckung von Paneelen, insbesondere für die Möbelindustrie, sowie zugehöriges Herstellungsverfahren
Feuilles décoratives à effet métallique pour recouvrir des panneaux, en particulier pour l'industrie de l'ameublement, et procédé de production correspondant

(30) Priority: 30.04.2010 IT MI20100751
(43) Date of publication of application: 02.11.2011
(73) Proprietor: BVR S.r.l., 22040 Lurago d'Erba (Como) (IT)
(72) Inventor: Orio, Stefano, 22044, INVERIGO (COMO) (IT); Broggi, Paolo, 22044, INVERIGO (COMO) (IT)
(74) Representative: Petruzziello, Aldo

(56) References cited:
- EP-A2- 1 683 630
- FR-A1- 2 760 208

## Description

The present invention relates to the sector of materials for covering and cladding panels or panellings normally used in the furniture and doors industry.

More particularly the present invention relates to covering materials as defined above, suitable for providing the surfaces of furniture and/or doors with a metallic finish, for example silvered, and suitable for gluing on panels/panellings in wood.

In the furniture industry there is constant demand for an increase in the pleasing appearance of veneered furniture and/or doors by using surface finishes of particular aesthetic value, for example by providing the veneer with a lacquer, gloss, embossed finish and also with inserts or portions of metal foils of varyingly large size.

These inserts are generally applied to the previously milled and/or pantographed wooden panel so as to form a cavity having substantially the same depth as the thickness of the metallic insert. This type of process is however burdensome both from the economic and production times viewpoint.

In recent years the practice has also become very widespread of imparting special decorative effects to furniture, doors and furnishing items in general by using covering materials in the form of finished sheets, made properly to the size of the panel to be covered, so as to be able to be glued to the external surfaces of the panels or panellings in MDF or another material.

Said finished sheets are prepared by joining one to the other, with glue or thread or paper, pieces of covering sheets with a base of wood types, whereon surface finishes consisting of paint or embossing may be present.

If these covering materials are to be used while creating at the same time decorative metallic effects, for example silvered, it is necessary to join together portions made of metal foils (aluminium in the case of silvering) and portions of these covering materials. However the joining of pieces composed of different materials cannot always be carried out, just like the gluing of portions of thin aluminium sheets on backing panels in wood.

The object of the present invention is to provide a material for the covering of panels or panellings which is able to confer a metallic appearance, for example silvered, suitable for being applied to substrates in wood, able to overcome the disadvantages of the prior art and which does not require the use of milling and/or pantographs.

Another object of the present invention is to provide such a material which can easily be glued onto wood substrates and can also be joined with conventional covering materials.

A further object of the present invention is to provide a process for preparing such a material which is practical, economical and easy to manufacture.

These objects are achieved in accordance with the invention with the features listed in the annexed independent claims.

Advantageous embodiments of the invention are disclosed by the dependent claims.

The material of the present invention comprises a thin sheet of metal, preferably aluminium and copper, which is coupled by means of glue to a sheet of wood in turn provided with a backing substrate.

Thanks to the presence of a baking substrate generally made in paper, nonwoven fabric (NWF), wood or the like, it is possible to make said multilayer (bonded) material adhere to the surface of panels and panellings generally in wood, thus succeeding in covering these panels while generating decorative effects of a metallic type.

Moreover this substrate also allows pieces of the material of the present invention to be joined easily with pieces of conventional covering material which is also backed with impregnated paper, nonwoven fabric (cellulosic fibre), plastic film or the like.

The metallic surface of the multilayer material as defined above is further treated by embossing.
In general the surface of the metal foil is embossed and optionally painted or coloured subsequently.

The application of the already finished material, in the form of a sheet, to the panel in MDF or another material will be carried out using glue, for example an acrylic, polyurethanic glue, vinylic, ureic glues and the like.

Further features of the invention will be made clearer by the following detailed description, referred to one of its embodiments purely by way of a non-limiting example illustrated in the accompanying drawings, in which:
Figs. 1 a), b), c) are perspective views illustrating schematically the phases of production of the covering material with metallic surface in the form of a roll according to the invention;
Fig. 2 is an enlarged cross section view along the section plane II-II of Fig. 1 c);
Fig. 3 is a schematic view from above of the embossed material of the invention cut into pieces of various sizes to make the finished embossed covering sheets illustrated in Figures 5 a) and b);
Figs. 4 a), b), c) are schematic views from below of two pieces of embossed material of the invention illustrating the different types of join;
Figs. 5 a), b) are views from above of two different finished embossed covering sheets obtained from the different combination of the pieces of Fig. 3 during their joining.

With the aid of the drawings a description is given of the method of production of the covering material having a metal for the furniture industry according to the invention.

It starts with small sheets of sliced wood 2 obtained from the previous slicing or peeling of trunks of wood. Alternatively it can start with sliced multilaminar wood. The sliced multilaminar wood is obtained by gluing one to the other various sheets of coloured wood (usually not high quality) as if to obtain a new trunk and then by slicing this multilaminar wood. The various layers of coloured wood simulate the rings of the trunk of wood, re-creating the veins of the normal sliced wood.

These sheets of multilaminar or sliced wood 2 may have a thickness of approximately 0.2 - 1 mm, preferably from 0.5 mm to 0.8 mm, more preferably 0.5 mm.

Subsequently the small sheets of wood 2 are joined longitudinally to obtain the required width of the roll which is to be used in the subsequent phases of processing.

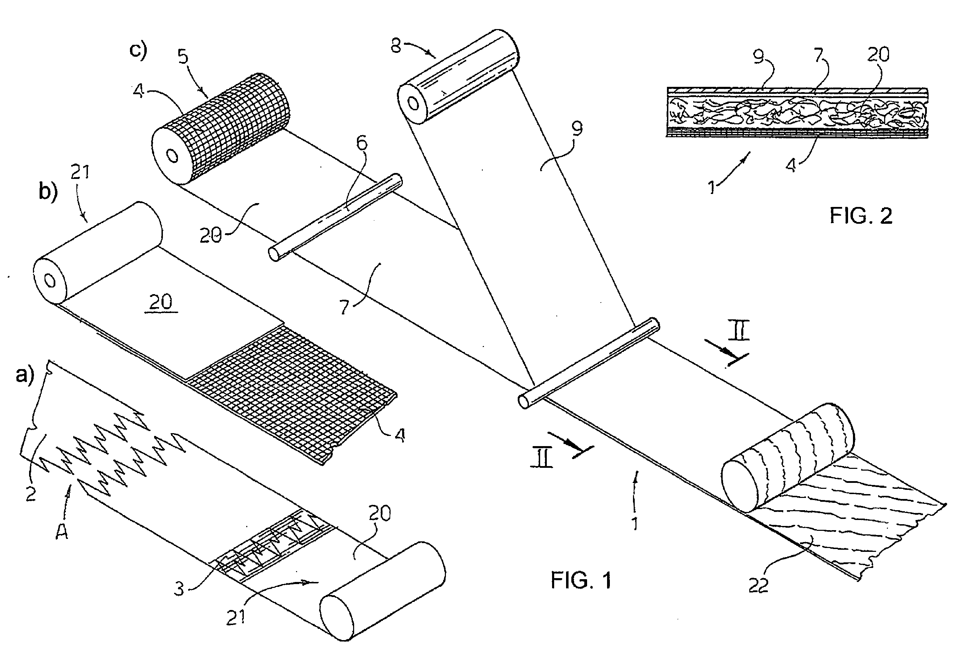

The small sheets of wood 2 are squared and joined transversely, generally with a comb A or straight pattern, by means of the application of an adhesive tape 3 (Fig. 1a). Then the various small sheets of wood 2, after being joined continuously, form a single sheet of wood 20 which is rolled up so as to obtain a roll 21.

In practice the longitudinal joining of the small sheets 2 is suitable for conferring a predetermined width to the future roll 21 while the subsequent transverse joining of said small sheets 2 is suitable for obtaining a single sheet of wood 20 of preset length to be rolled up in the form of a roll 21.

The rolls 21 of sheets of wood, obtained in this way, are processed on machines with a continuous process which perform the operation of backing as illustrated in Figure 1b). This operation consists of gluing a backing substrate 4 on the sheet of wood 20 reeled out from the roll 21. The backing substrate 4 can be impregnated paper, nonwoven fabric (cellulosic fibre), wood and the like. The backing material 4 has the function of ensuring a better grip on the surface of the panel/panelling whereon the sheet of wood has to be applied.

Subsequently, if necessary, it is possible to perform an operation of smoothing which consists of calibration of the sheet of wood 20 reeled out from the roll 21 to arrive at the required thickness.

After said operations, the sheet of wood 20 with the backing substrate 4 is wound into a reel 5. The reel 5 is fed towards a gluing machine 6 (Fig. 1c) which deposits a layer of glue 7 on the surface of the sheet of wood 20. The glue 7 is generally acrylic, polyurethanic or vinylic glue, preferably polyurethanic.

A film (foil) 9 of aluminium or copper, reeled out from a reel 8, is then applied on the layer of glue 7. The film 9 has a thickness comprised between 10 and 300 microns, preferably between 100 and 200 microns. The film 9 is preferably in aluminium, although generally other metal materials in the form of a thin foil can be applied.

In this way a finished product 1 is obtained in the form of a sheet of covering material according to the invention, as shown in Fig. 2. The sheet of covering material 1 comprises a sheet of wood 20 coupled to a film of metallic material 9, by means of a layer 7 of glue.

Subsequently it is possible to perform on the metallic surface 9 of the sheet 1 a surface finish by means of mechanical embossing. The purpose of the embossing is to treat the surface so as to imitate the various pores of the wood or particular pattern effects. This operation is performed with the use of an embossing machine (not illustrated in the drawing) provided with one or more embossing cylinders 10 which are provided with incisions able to reproduce the required pattern (Fig. 1c). In this way it is possible to obtain a sheet of material with an embossed surface 22.

A surface finish paint, such as a paint with an acrylic, polyester or polyurethanic base, can be optionally applied on the embossed metal film 9, for example by means of a painting machine (not illustrated in the drawing).

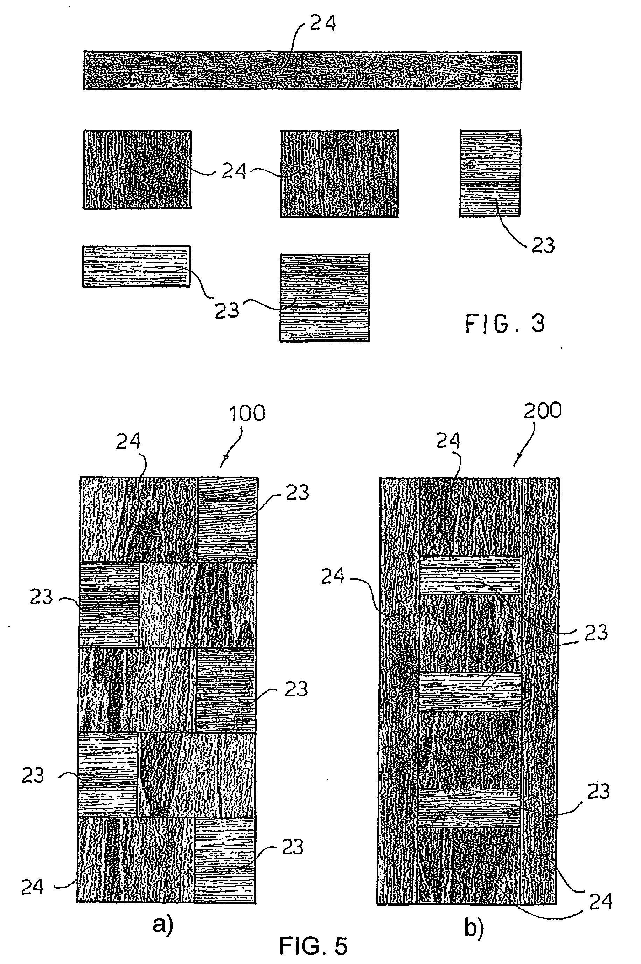

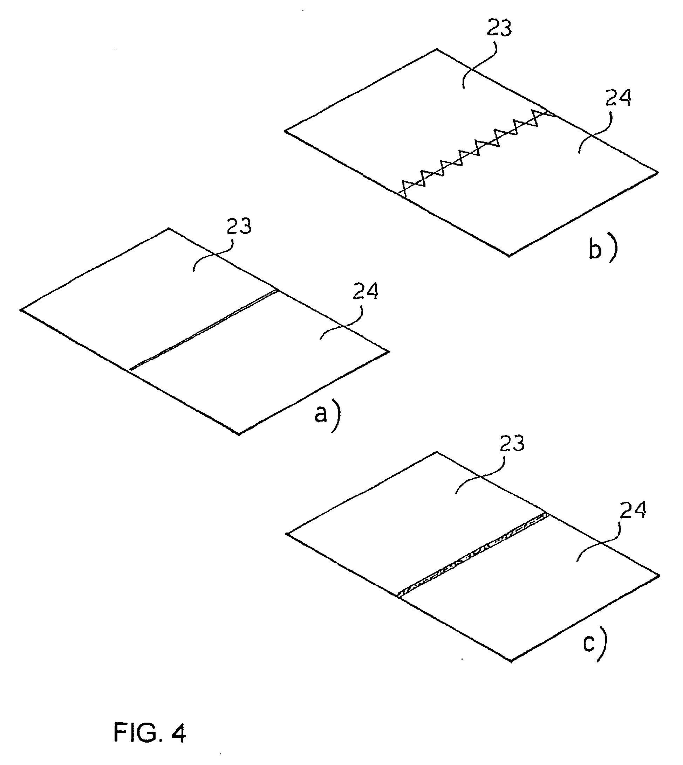

Subsequently sectioning of the embossed and optionally painted sheet 1 takes place in order to form pieces 23 (Fig. 3) of the required size, intended to be joined on the back (Figs. 4 a),b),c)) with other pieces 24 sectioned from backed sheets of similar covering material yet not having the surface constituted by the metal foil 9. In this way it is possible to form a covering sheet 100, 200, already surface finished and of preset size equal to the dimensions of the panel to be covered, and representing a preset decorative pattern wherein pieces with metallic surface 23 are alternated with different pieces 24 (Fig. 5 a), b)).

The sectioned pieces 23 can be joined one to the other or with other pieces 24 so as to obtain symmetrical patterns to simulate the veins of a trunk of wood, or in an asymmetrical manner so as to create optical effects using slices of woods of a different colour.

The joining of said pieces 23, one to the other or in combination with the pieces 24, takes place on the back or rear side of said pieces.

The pieces 24 can be obtained by sectioning from covering materials known in the art and reproducing a wood type, for example made up of a layer of a wood type (wood or multilaminar) backed with paper, nonwoven fabric, or other types of material, whose wood surface has been subjected to smoothing and/or dyeing, surface finishing by means of painting and/or application of transparent film.

As illustrated in Figs. 4 a),b),c) the joining between a piece 23 and a piece 24, adjacent one to the other, can be performed by means of glue (Fig. 4a), hot-melt glue thread (Fig. 4b) or paper (Fig. 4c), preferably by means of thread. This same type of joining with glue, thread, paper can be used for the joining of two adjacent pieces 23, taken from the material in accordance with the present invention.

It is to be understood that the number of pieces 23, 24 which goes to form the sheet 100, 200, and the dimensions of said pieces 23, 24 are not binding for the purposes of the present invention.

With the method of the present invention it is possible to couple a thin sheet of metal, for example aluminium, copper, or the like, whether it is painted, unfinished or coloured or embossed, with a sheet of wood whether natural or obtained by means of particular operations of processing of the wood itself (known as multilaminar/reconstituted/fineline). This coupling serves to equate a metallic visual surface such as aluminium, copper and the like, with the technical features of the wood which serve in certain joining processes.

In fact, in order to be able to join different materials in an effective manner it is useful for their backing to have the same structure, for example wood, paper or the like, in order to be able to use existing technologies (joining with glue, thread, paper).

It is to be understood that it is also possible to join said pieces 23 one to the other so as to form a finished sheet 100, 200 having a completely metallic surface.

Once the sheet 100, 200 has been prepared, obtained by means of the joining of pieces 23, possibly also with other pieces 24, it is then glued over a panel/panelling (not illustrated in the drawing) which constitutes the core of the covered panel/panelling. Thanks to the affinity of the backing material 4 with the material of the panels it is possible to obtain high adherence between the sheet 100, 200 and the panel to be covered.

Even if this is not binding for the purpose of the present invention said backing panels or panellings generally have a flat surface, a thickness of approximately 4-6 mm, and are formed by any material for panels (chipboard, melamine-faced, MDF, honeycomb, etc.) by means of a traditional flat press. Nevertheless different panels/panellings can also be used.

After having been covered with the sheet 100, 200 containing metallic portions 23 in accordance with the invention, the coated panels/panellings can be applied to perimeter frames of doors or of wardrobes so as to form the external surface of said wardrobes or doors, without having to apply the external paint finish generally used in the art over the embossed surfaces.

The advantage of the multilayer material of the present invention is that it allows production in a simple and versatile manner of a covering of panels/panellings with metallic finishes simply by gluing a sheet of the size of the panel/panelling and already surface finished, which has been prepared previously simply by joining finished pieces of material in accordance with the invention. In this way it is no longer necessary to resort to any treatment of preparation of the panel to be covered nor subsequent treatments of finishing of the covered panel which presuppose the moving of said panel.

Numerous detail modifications and changes, within the reach of a person skilled in the art, may be made to the present embodiment of the invention, in any case coming within the scope of the invention disclosed by the annexed claims.

## Claims

1. Multilayer material (1) suitable for preparing the covering sheet for panels and panellings comprising a metal foil (9) coupled by means of glue (7) to a sheet of wood (20) provided with a backing substrate (4) which is suitable for adhering to panels/panellings in wood, the surface of said metal foil (9) being embossed.

2. Material according to claim 1 wherein the sheet of wood (20) is sliced or multilaminar.

3. Material according to claim 1 or 2 wherein the sheet of wood (20) has a thickness comprised between 0.2 and 1 mm.

4. Material according to any one of the previous claims wherein the backing substrate (4) is selected from the group consisting of impregnated paper, nonwoven fabric, or wood.

5. Material according to claim 4 wherein the nonwoven fabric of the backing substrate (4) is made of cellulosic fibre.

6. Material according to any one of the previous claims wherein the metal foil (9) has a thickness comprised between 10 and 300 microns.

7. Material according to any one of the previous claims wherein the glue (7) comprises an acrylic, polyurethanic or vinylic glue.

8. Material according to claim 7 wherein the glue (7) is polyurethanic.

9. Material according to any one of the previous claims wherein the metal of the foil (9) is aluminium or copper.

10. Material according to any one of the previous claims wherein the embossed metal foil (9) is painted or coloured.

11. Sheets (100, 200) suitable for covering panels and panellings, formed by joining or splicing pieces (23) sectionable from a sheet of material (1) as defined in any one of the previous claims 1-10, or by joining said pieces (23) in combination with pieces (24) sectionable from backed sheets of covering material reproducing wood types not containing a metal foil (9).

12. Sheets according to claim 11 wherein the joining of said pieces (23;24) is performed by means of glue, hot-melt glue thread or paper.

13. Sheets according to claim 12 wherein the joining of said pieces (23;24) is performed by means of thread.

14. Panels and panellings for furniture and doors covered with sheets (100, 200) containing metallic portions as defined in any one of the previous claims 11-13.

15. Method for obtaining a sheet (100, 200) suitable for covering panels or panellings as defined by claims 11-13 from a sheet of material (1) as defined in claims 1-10, comprising:
longitudinal joining of small sheets of sliced wood or multilaminar wood (2) to obtain a required width for a roll (21),
subsequent transverse joining of said small sheets (2), generally with a comb or straight pattern, by applying an adhesive tape (3) such as to obtain a single sheet of wood (20) having a preset length,
gluing of a backing substrate (4) on the sheet of wood (20) reeled out from the roll (21),
coupling of the resulting sheet with a metal foil (9),
surface finishing treatment of the surface of the metal foil (9) of the aforesaid sheet of material (1), by means of mechanical embossing,
sectioning of said embossed sheet of material (1) in order to form pieces (23) of the required size,
joining on the back of said pieces (23) or of said pieces (23) in combination with pieces (24) sectionable from backed sheets of covering material reproducing wood types not containing a metal foil (9).

## Patentansprüche

1. Mehrschichtiges Material (1), das geeignet ist zur Herstellung der Deckplatte für Paneele und Paneelverkleidungen, umfassend eine Metallfolie (9), die mittels Leim (7) mit einer Holzplatte (20) verbunden ist, die mit einem Trägersubstrat (4) versehen ist, das zum Anheften an Paneele/Paneelverkleidungen in Holz geeignet sind, wobei die Oberfläche der Metallfolie (9) geprägt ist.

2. Material nach Anspruch 1, wobei die Holzplatte (20) gemessertes oder Multilaminat-Holz ist.

3. Material nach Anspruch 1 oder 2, wobei die Holzplatte (20) eine Dicke aufweist, die zwischen 0,2 und 1 mm liegt.

4. Material nach einem der vorhergehenden Ansprüche, wobei das Trägersubstrat (4) aus der Gruppe ausgewählt ist, die aus imprägniertem Papier, Vlies oder Holz besteht.

5. Material nach Anspruch 4, wobei das Vlies des Trägersubstrats (4) aus Zellulosefaser besteht.

6. Material nach einem der vorhergehenden Ansprüche, wobei die Metallfolie (9) eine Dicke aufweist, die zwischen 10 und 300 Mikrometern liegt.

7. Material nach einem der vorhergehenden Ansprüche, wobei der Leim (7) einen Acryl-, Polyurethan- oder Vinylleim umfasst.

8. Material nach Anspruch 7, wobei der Leim (7) Polyurethanleim ist.

9. Material nach einem der vorhergehenden Ansprüche, wobei das Metall der Folie (9) Aluminium oder Kupfer ist.

10. Material nach einem der vorhergehenden Ansprüche, wobei die geprägte Metallfolie (9) mit einem Lack versehen oder gefärbt ist.

11. Platten (100, 200), die zum Abdecken von Paneelen und Paneelverkleidungen geeignet sind und durch Aneinanderfügen oder Zusammenfügen von Stücken (23), die von einer Platte aus Material (1) nach einem der vorhergehenden Ansprüche 1 bis 10 abtrennbar sind, oder durch Aneinanderfügen der Stücke (23) in Kombination mit Stücken (24) gebildet sind, die von auf Trägermaterial aufgebrachten Platten von Abdeckmaterial, das Holzarten nachbildet und keine Metallfolie (9) enthält, abtrennbar sind.

12. Platten nach Anspruch 11, wobei das Aneinanderfügen der Stücke (23; 24) mittels Leim, Heißleimfaden oder -papier erfolgt.

13. Platten nach Anspruch 12, wobei das Aneinanderfügen der Stücke (23; 24) mittels Faden erfolgt.

14. Paneele und Paneelverkleidungen für Möbel und Türen, die mit Platten (100, 200), die metallische Abschnitte enthalten, nach einem der vorhergehenden Ansprüche 11 bis 13 abgedeckt sind.

15. Verfahren zum Herstellen einer Platte (100, 200) nach Anspruch 11 bis 13, die zum Abdecken von Paneelen oder Paneelverkleidungen geeignet ist, aus einer Platte von Material (1) nach Anspruch 1 bis 10, umfassend:
Aneinanderfügen in Längsrichtung von kleinen Platten aus gemessertem Holz oder Multilaminat-Holz (2), um eine erforderliche Breite für eine Rolle (21) herzustellen,
anschließendes Aneinanderfügen in Querrichtung der kleinen Platten (2), im Allgemeinen in einem Kamm- oder geraden Muster, durch Aufbringen eines Klebebandes (3), um so eine einzelne Platte aus Holz (20) mit einer vorgegebenen Länge herzustellen,
Leimen eines Trägersubstrats (4) an die Platte aus Holz (20), die von der Rolle (21) abgewickelt wird,
Verbinden der entstandenen Platte mit einer Metallfolie (9),
Oberflächenbehandlung der Oberfläche der Metallfolie (9) der Platte aus Material (1) mittels mechanischen Prägens,
Durchtrennen der geprägten Platte aus Material (1), um Stücke (23) der erforderlichen Größe zu bilden,
rückseitiges Aneinanderfügen der Stücke (23) oder der Stücke (23) in Kombination mit Stücken (24), die von auf Trägermaterial aufgebrachten Platten von Abdeckmaterial, das Holzarten nachbildet und keine Metallfolie (9) enthält, abtrennbar sind.

## Revendications

1. Matériau multicouche (1) approprié pour préparer la feuille de revêtement pour des panneaux et habillages comprenant une feuille métallique (9) couplée au moyen de colle (7) à une feuille de bois (20) pourvue d'un substrat support (4) qui est approprié pour adhérer aux panneaux/habillages en bois, la surface de ladite feuille métallique (9) étant gaufrée.

2. Matériau selon la revendication 1, dans lequel la feuille de bois (20) est tranchée ou multilaminaire.

3. Matériau selon la revendication 1 ou la revendication 2, dans lequel la feuille de bois (20) a une épaisseur comprise entre 0,2 et 1 mm.

4. Matériau selon l'une quelconque des revendications précédentes, dans lequel le substrat support (4) est sélectionné parmi le groupe constitué de papier imprégné, de tissu non tissé, ou de bois.

5. Matériau selon la revendication 4, dans lequel le tissu non tissé du substrat support (4) est fabriqué en fibre cellulosique.

6. Matériau selon l'une quelconque des revendications précédentes, dans lequel la feuille métallique (9) a une épaisseur comprise entre 10 et 300 microns.

7. Matériau selon l'une quelconque des revendications précédentes dans lequel la colle (7) comprend une colle acrylique, polyuréthane ou vinylique.

8. Matériau selon la revendication 7, dans lequel la colle (7) est polyuréthane.

9. Matériau selon l'une quelconque des revendications précédentes, dans lequel le métal de la feuille métallique (9) est de l'aluminium ou du cuivre.

10. Matériau selon l'une quelconque des revendications précédentes, dans lequel la feuille métallique gaufrée (9) est peinte ou colorée.

11. Feuilles (100, 200) appropriées pour revêtir des panneaux et des habillages, formées par la jonction ou le raccordement de pièces (23) pouvant être sectionnées à partir d'une feuille de matériau (1) tel que défini dans l'une quelconque des revendications 1 à 10 précédentes, ou par jonction desdites pièces (23) en combinaison à des pièces (24) pouvant être sectionnées à partir de feuilles de support de matériau de revêtement reproduisant des types de bois ne contenant pas de feuille métallique (9).

12. Feuille selon la revendication 11, dans laquelle la jonction desdites pièces (23 ; 24) est réalisée au moyen d'une colle, d'une colle thermofusible, d'un filetage ou d'un papier.

13. Feuilles selon la revendication 12, dans laquelle la jonction desdites pièces (23 ; 24) est réalisée au moyen d'un filetage.

14. Panneaux et habillages pour meubles et portes couverts avec des feuilles (100, 200) contenant des portions métalliques telles que définies dans l'une quelconque des revendications 11 à 13 précédentes.

15. Procédé d'obtention d'une feuille (100, 200) appropriée pour revêtir des panneaux ou habillages tels que définis par les revendications 11 à 13 à partir d'une feuille de matériau (1) tel que défini aux revendications 1 à 10, comprenant les étapes consistant à:
joindre de façon longitudinale des petites feuilles de bois tranché ou de bois multilaminaire (2) afin d'obtenir une largeur requise pour un rouleau (21),
joindre ensuite de façon transversale lesdites petites feuilles (2), en général avec un motif en peigne ou droit, par application d'un ruban adhésif (3) de façon à obtenir une feuille unique de bois (20) ayant une longueur prédéterminée,
coller un substrat support (4) sur la feuille de bois (20) dévidée du rouleau (21),
coupler la feuille résultante avec une feuille métallique (9),
effectuer un traitement de finition de surface de la surface de la feuille métallique (9) de la feuille de matériau (1) mentionnée ci-dessus, au moyen d'un gaufrage mécanique,
sectionner ladite feuille de matériau (1) gaufrée afin de former des pièces (23) de la taille requise,
joindre sur le verso desdites pièces (23) ou desdites pièces (23) en combinaison avec les pièces (24) pouvant être sectionnées à partir de feuilles de support de matériau de revêtement reproduisant des types de bois ne contenant pas de feuille métallique (9).
